# FASCICULE DE BREVET EUROPEEN

(11) **EP 3 400 122 B1**
(45) Date de publication et mention de la délivrance du brevet: **28.06.2023**
(21) Numéro de dépôt: 17700493.4
(22) Date de dépôt: 05.01.2017
(51) Int. Cl.: B29C 48/08, B29C 48/156, B29C 48/17, B29C 48/30, A44C 27/00, A44C 5/00, B29L 31/00

(54) **BRACELET ET SON PROCÉDÉ DE FABRICATION**
ARMBAND UND SEIN HERSTELLUNGSVERFAHREN
BRACELET AND METHOD FOR MANUFACTURING THEREOF

(30) Priorité: 07.01.2016 EP 16150493
(43) Date de publication de la demande: 14.11.2018
(73) Titulaire: The Swatch Group Research and Development Ltd, 2074 Marin (CH)
(72) Inventeur: RANNOUX, Claire, 1110 Morges (CH); FRANÇOIS, Nicolas, 2000 Neuchâtel (CH); CELERIER, Yannick, 71510 Aluze (FR); BLANC PETIOT, Catherine, 71380 Saint-Marcel (FR); LAFIN, Benoît, 71370 Saint-Christophe-en-Bresse (FR)
(74) Mandataire: ICB SA
(86) Numéro de dépôt international: PCT/EP2017/050173
(87) Numéro de publication internationale: WO 2017/118678

(56) Documents cités:
- EP-A1- 1 172 164
- DE-A1- 3 802 396
- DE-A1- 19 513 647
- FR-A- 1 453 496
- GB-A- 634 465
- GB-A- 1 359 584
- JP-A- 2002 052 594
- JP-A- 2003 164 307
- KR-A- 20060 125 132
- US-A- 3 610 488
- US-A- 4 234 657
- US-A- 5 383 100

## Description

### OBJET DE L'INVENTION

La présente invention se rapporte au domaine de l'horlogerie et de la bijouterie. Plus particulièrement, elle se rapporte à un procédé de fabrication d'un bracelet de montre ou de bijoux fantaisies et aux bracelets ou bijoux fantaisies obtenus par ce procédé.

### ARRIÈRE-PLAN TECHNOLOGIQUE ET ÉTAT DE LA TECHNIQUE

Aujourd'hui, les bracelets de montres ou les bijoux fantaisies en plastique sont essentiellement fabriqués par moulage soit par injection, soit par compression. Ces procédés permettent la fabrication rapide de grandes séries de ce type d'objets en matière plastique avec des formes complexes. Ils présentent cependant comme désavantage de nécessiter un outillage coûteux, d'autant plus coûteux que l'objet est complexe. En outre, si on souhaite obtenir des bracelets ou des bijoux fantaisies avec différentes couleurs ou matières dans la masse, il est nécessaire d'avoir recours à plusieurs étapes de surmoulage ou de bi-injection. Par la suite, nous ne parlerons que de bracelets de montre, mais uniquement à titre d'exemple et sans limitation à d'autres objets portables ou non réalisables avec cette technique.

Dans le passé, il a été proposé de réaliser des bracelets de montre par un procédé d'extrusion, qui est un procédé moins coûteux. Ainsi, le document FR 2 121 864 divulgue un procédé de fabrication d'une bande plastique présentant aux extrémités latérales des canaux cylindriques destinés à recevoir les tiges de support du boîtier de montre.

La fabrication de bracelets par extrusion s'est limitée à la fabrication de bracelets de forme simple, unicolores et réalisés dans un même matériau. Or, les bracelets présentant un relief, des couleurs différentes ou un toucher particulier sont très prisés par les clients. Outre les aspects esthétiques, il peut également être intéressant d'intégrer divers matériaux au sein du bracelet afin de modifier les propriétés fonctionnelles du bracelet, comme par exemple accroître la rigidité à certains endroits précis du bracelet, qui sont plus sollicités mécaniquement. Il est aussi possible de réaliser une surface avec un toucher agréable, et une partie inférieure confortable, par exemple limitant la transpiration, pour être en contact permanent avec la peau
On connait du document GB634465 une bande décorative souple comprenant une partie de corps formée de matière thermoplastique souple extrudée.

### RÉSUMÉ DE L'INVENTION

La présente invention a pour objet de réaliser des bracelets présentant des géométries et motifs originaux à l'aide d'un procédé simple et peu coûteux. La présente invention vise en outre à réaliser des bracelets avec des propriétés fonctionnelles variables, comme par exemple présentant des renforts localisés à certains endroits précis

A cette fin, l'invention concerne un procédé de fabrication d'un bracelet de montre ou de bijou défini par la revendication 1 du brevet.

Des formes d'exécution particulières sont reprises dans les revendications dépendantes de la revendication 1.

### BRÈVE DESCRIPTION DES FIGURES

Les caractéristiques et avantages de la présente invention apparaîtront à la lecture de la description détaillée ci-dessous faisant référence aux figures suivantes.
La figure 1 représente une vue schématique d'une ligne d'extrusion connue en soi.
Les figures 2a et 2b représentent une vue en perspective de bracelets fabriqués avec un procédé d'extrusion. Les bracelets selon ce mode de réalisation forment respectivement un tube à la figure 2a et une bande bombée à la figure 2b.
Les figures 3 et 4 représentent des vues en perspective de montres avec un bracelet fabriqué selon un procédé d'extrusion. Les bracelets présentent des zones en relief séparées par des creusures.
La figure 5 représente une vue schématique de deux extrudats issus de la filière. Selon l'invention, le bracelet est extrudé dans le sens transversal du bracelet. La figure 6 représente une vue en perspective de ces mêmes extrudats avec à une ou à chaque extrémité latérale une structure tubulaire creuse.
La figure 7 représente une vue schématique des extrudeuses en amont de la filière de co-extrusion. Les figures 8 et 9 présentent une vue du dessus des bracelets ainsi obtenus avec des rayures transversales et longitudinales respectivement.
La figure 10 représente une vue en perspective de l'extrudat issu du procédé selon l'invention. Il comporte au niveau de ses extrémités latérales une matière plastique distincte de celle disposée au centre.
La figure 11 représente une vue partielle en perspective de l'extrudat issu du procédé selon l'invention avec un renfort intégré au niveau des extrémités latérales.
La figure 12 représente une vue partielle en perspective d'une montre avec un bracelet obtenu selon le procédé de l'invention et fixé au boîtier avec une construction de type NATO.
La figure 13 représente une vue en perspective d'une montre avec un bracelet obtenu selon un procédé d'extrusion, avec fermeture par un système à clous.
La figure 14 représente un brin du bracelet issu d'un extrudat de la figure 6 après découpe laser ou étampage pour réaliser les trous nécessaires à la fixation sur le boîtier de montre et sur la boucle.
La figure 15 représente une boîte de montre avec un système de cornes pour accrocher le bracelet.
La figure 16 représente une boucle de fermeture à fixer au bracelet avec un système de barrette.
La figure 17 représente une montre avec un bracelet bicolore avec la couleur de la face intérieure différente de la couleur de la face extérieure.
La figure 18 représente un brin de bracelet noir avec des bandes phosphorescentes obtenu par le procédé de co-extrusion décrit dans l'invention. Une première vue est une vue en coupe longitudinale du brin de bracelet et la seconde vue est une vue du dessus du brin de bracelet.
Les figures 19 à 29 représentent diverses autres variantes d'un bracelet obtenu selon le procédé de l'invention.

### DESCRIPTION DÉTAILLÉE DE L'INVENTION

La présente invention se rapporte à un procédé de fabrication de bracelets pour montres ou de bijoux fantaisies par extrusion de matière plastique.

Le procédé peut consister à fabriquer un extrudat ayant une largeur correspondant à la largeur du bracelet ou comme selon l'invention à fabriquer un extrudat ayant une largeur correspondant à la longueur d'un brin ou des deux brins du bracelet.

Le bracelet obtenu avec le procédé selon l'invention a pour caractéristique de présenter un profil original, des rayures de couleurs, y compris des rayures luminescentes, ou des propriétés différentes selon la position. Il peut bien entendu présenter une ou plusieurs de ces caractéristiques.

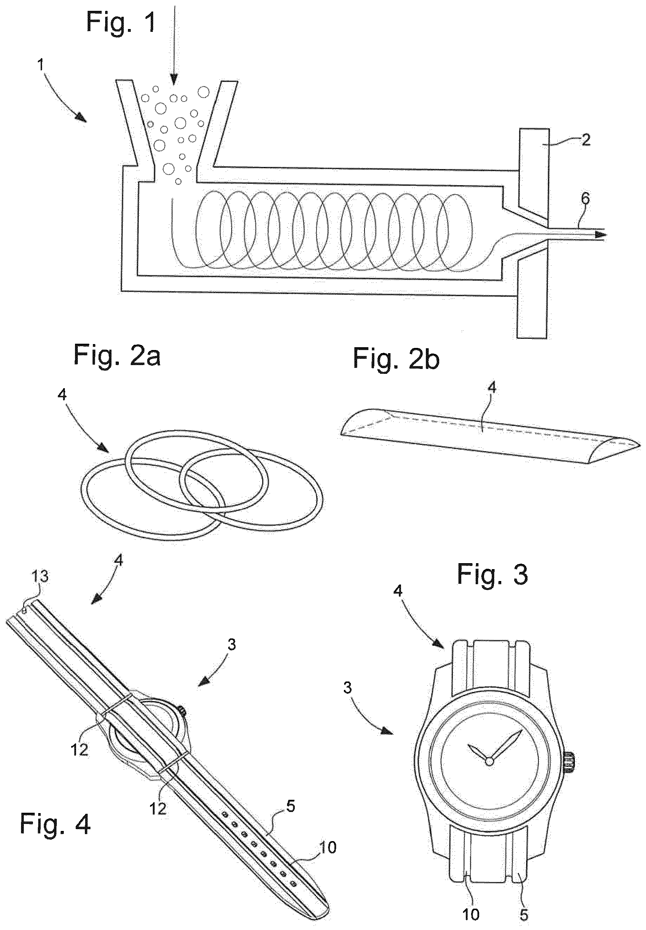

On entend par profil original, un bracelet de section transversale arrondie formant, par exemple, un ovale, un cercle ou un demi-fuseau. A titre d'exemple illustré aux figures 1 et 2a, la filière 2 de la ligne d'extrusion 1 est adaptée pour fabriquer un bracelet 4 formant un tube plein ou creux. A la figure 2b est représenté un bracelet avec un profil formant un demi-fuseau, c.à.d. un profil bombé formé d'un bord plat surmonté par un bord avec un certain rayon de courbure. On entend également par profil original un bracelet présentant sur sa section transversale ou sur sa section longitudinale des motifs tridimensionnels formés de zones en relief, qu'on qualifiera de zones en saillie. Par exemple, le bracelet 4 issu du procédé peut être formé de bandes longitudinales en saillie 5 séparées par une ou plusieurs creusures 10 comme représenté aux figures 3 et 4. De nombreux profils sont imaginables avec un profil symétrique ou non symétrique par rapport respectivement à l'axe longitudinal ou transversal du bracelet. La ou les zones en saillie peuvent s'étendre longitudinalement ou transversalement selon que le procédé d'extrusion consiste à fabriquer un extrudat de largeur correspondant à la largeur du bracelet ou comme selon l'invention un extrudat de largeur correspondant à la longueur d'un brin ou des deux brins du bracelet.

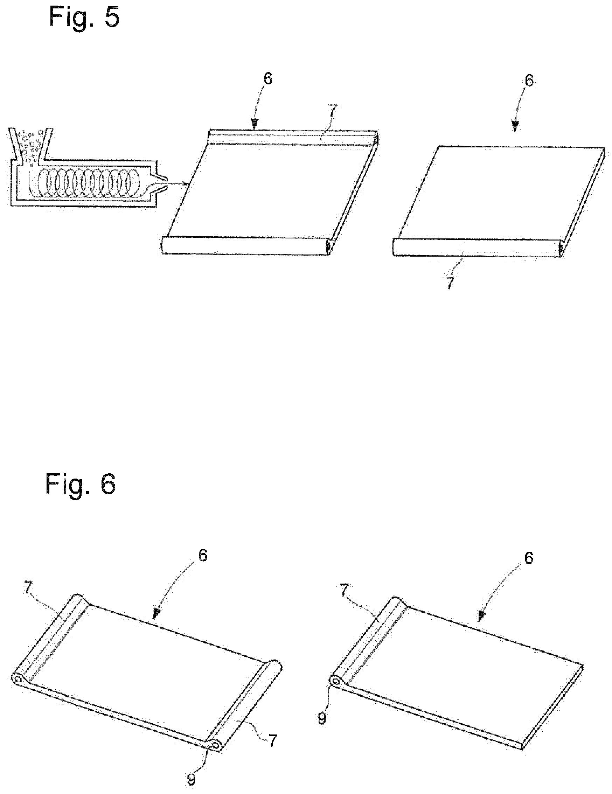

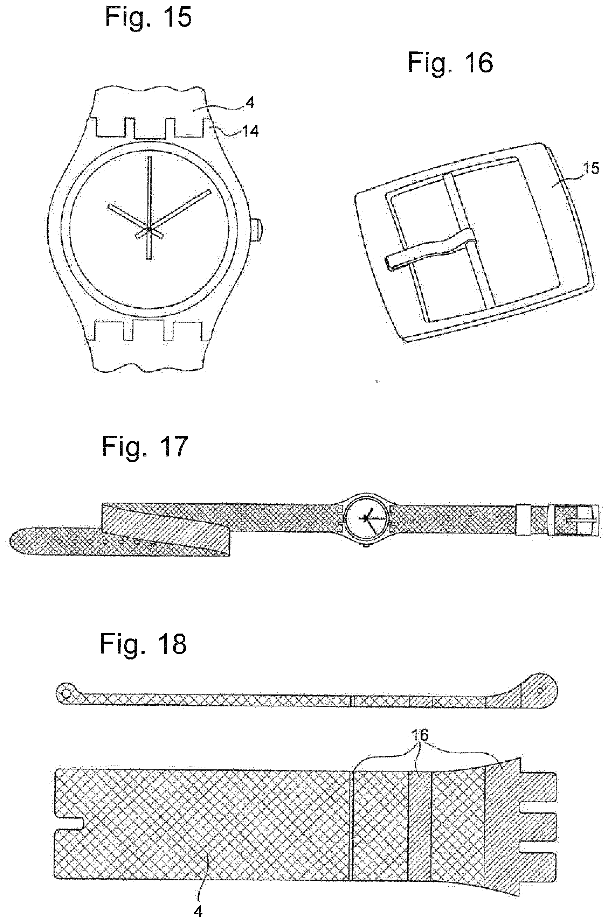

Pour faciliter l'assemblage ultérieur du bracelet au boîtier de montre, il est avantageux de fabriquer un extrudat 6 de largeur correspondant à la longueur d'un brin avec à une ou à chaque extrémité latérale de l'extrudat une structure tubulaire creuse en saillie 7 comme représenté aux figures 5 et 6. Les structures tubulaires creuses forment des trous débouchants 9 destinés à recevoir respectivement une barrette permettant l'accroche à une boîte de montre avec des cornes 14 comme montré à la figure 15 et à une boucle 15 comme montré à la figure 16. Il est également envisageable de réaliser un extrudat 6 possédant à une seule extrémité latérale une structure tubulaire creuse en saillie 7. Dans ce cas, cette dernière forme un trou débouchant destiné à recevoir la barrette permettant l'accroche à la boîte de montre avec des cornes 14 (figure 15). Il est en outre envisageable de réaliser les deux brins du bracelet partant d'une seule bande avec une structure tubulaire à une extrémité latérale et deux structures tubulaires situées à proximité du centre de la bande et d'effectuer ultérieurement les découpes nécessaires pour obtenir les deux brins.

On a décrit ci-dessus les profils originaux qui peuvent être obtenus grâce au procédé d'extrusion selon l'invention. Grâce à ce procédé, il est en outre aisé de combiner au sein du bracelet plusieurs matières qui se distinguent par leurs couleurs et/ou leurs propriétés.

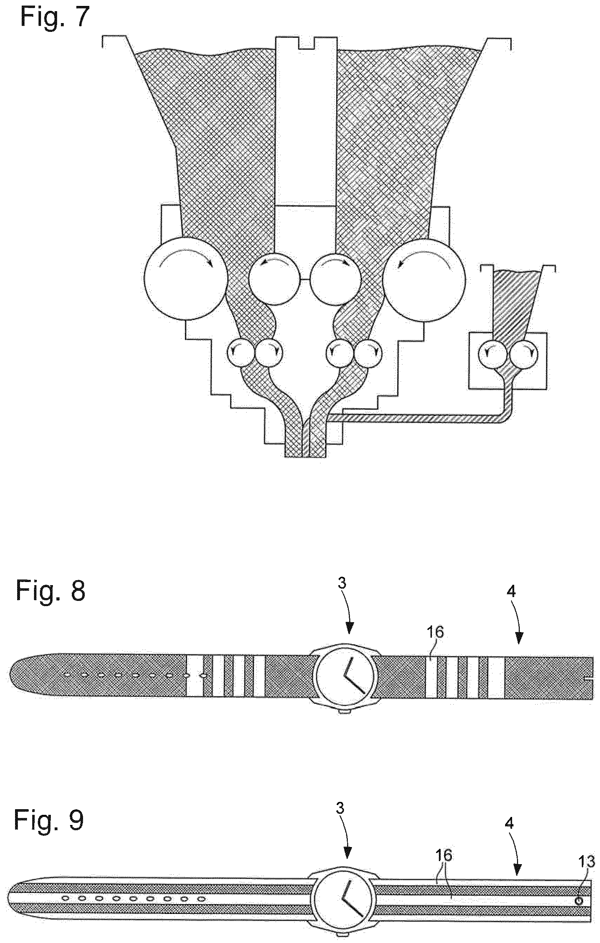

Ainsi, des bracelets présentant dans la masse une alternance de bandes 16 de couleurs différentes peuvent être réalisés par co-extrusion (figures 7 à 9). Comme précédemment, les bandes 16 peuvent s'étendre longitudinalement ou selon l'invention transversalement selon que l'extrudat a une largeur correspondant à la largeur ou comme selon l'invention à la longueur du bracelet. On entend également par bandes de couleurs des bandes luminescentes s'étendant dans le sens transversal ou longitudinal. Ainsi, la figure 18 illustre l'invention pour un bracelet présentant dans la masse trois bandes 16 phosphorescentes transversales. Le bracelet co-extrudé bi-couleur et bi-matière a été réalisé en polyuréthanes thermoplastiques (TPU) partant de deux machines d'extrusion solidarisées, avec une tête commune de co-extrusion. Une première machine est utilisée pour l'alimentation de la matière A et une seconde machine pour l'alimentation de la matière photoluminescente B. Les deux matières thermoplastiques sont ainsi acheminées dans l'outillage filière et poinçon permettant une répartition maitrisée des deux flux de matières. La répartition des deux flux de matières premières est donnée par l'outillage, les petites évolutions dimensionnelles étant modulées avec les paramètres machines (vitesse de tirage, températures de vis/fourreau, débit matière, vitesse de rotation des vis, etc...). Il est évidemment envisageable de solidariser une troisième machine avec une nouvelle tête de co-extrusion acceptant trois alimentations différentes pour co-extruder ce même type de bracelet en tri-matière et/ou en tri-couleur.

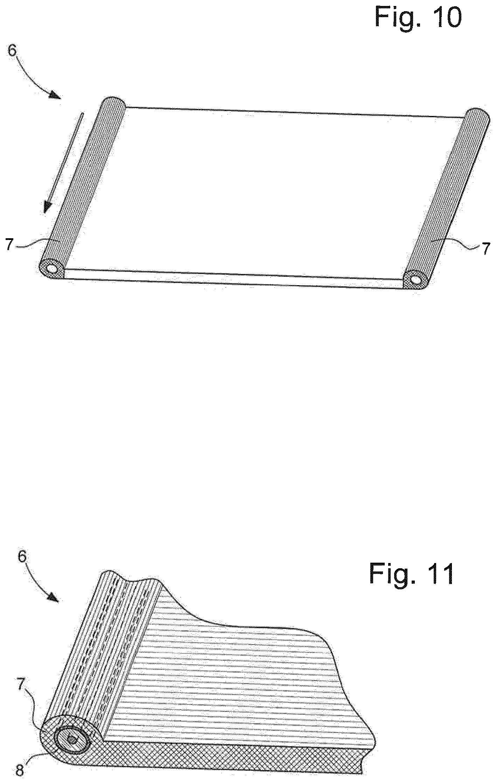

Il est également possible d'obtenir par ce procédé de co-extrusion, un bracelet bicolore avec une couleur du dessus différente de la couleur du dessous en contact avec la peau (figure 17). Des matières présentant des caractéristiques physiques différentes peuvent également être co-extrudées pour moduler les propriétés selon les zones du bracelet. Dans le cas d'un extrudat de largeur correspondant à la longueur d'un brin comme représenté à la figure 10 comme selon l'invention, il est particulièrement avantageux d'introduire aux extrémités latérales de la filière de co-extrusion une matière plastique présentant des propriétés mécaniques supérieures (meilleure résistance à la déchirure, à la traction ou un module d'élasticité plus élevé) car ces zones d'attache au boîtier et à la boucle sont particulièrement sollicitées mécaniquement. A titre d'exemple, la matière centrale peut comporter un thermoplastique avec une dureté shore A de 55 et les extrémités latérales un thermoplastique avec une dureté shore D de 55. La co-extrusion permet en outre de réaliser des bracelets présentant une matière de dessous différente de la matière du dessus. On peut notamment obtenir un bracelet avec une doublure confortable au toucher doux sur le dessous et un fini brillant sur le dessus. Selon un autre exemple, le bracelet peut comporter deux matériaux co-extrudés avec un premier matériau conférant des propriétés antibactériennes et/ou anti-transpirantes à la face intérieure du bracelet et un deuxième matériau conférant un fini esthétique particulier à la face extérieure du bracelet.

Selon un autre mode de réalisation, un renfort 8 peut être intégré lors de l'extrusion pour simuler le fil de couture, apporter résistance et rigidité à la matière plastique dans certaines zones, ou simplement créer un décor. Le renfort peut se présenter sous forme de câbles, de tubes, de fils ressorts en carbone ou autre matériau d'origine synthétique, naturelle, métallique ou minérale. Par exemple, un tube 8 métallique ou textile peut être intégré au niveau d'une ou des structures tubulaires 7 creuses, et, cela, toujours dans le but de renforcer cette partie fragile du bracelet (figure 11)..

Selon l'invention, les matières synthétiques utilisées lors de l'extrusion ou de la c-oextrusion sont des mélanges comprenant au moins un polymère thermoplastique. Préférentiellement, le mélange comprend moins un élastomère thermoplastique (TPE) choisi parmi la liste suivante:
- TPE-O - Oléfines thermoplastiques
- TPE-S - plus particulièrement les composés SBS, SEBS ou SEPS styrénique
- TPE-V - plus particulièrement les composés PP/EPDM vulcanisé ou les composés TPSi-V (combinaison de thermoplastique et de silicone réticulé)
- TPE-E - Composé de copolyester
- TPE-U - Polyuréthane thermoplastique
- TPE-A - Polyamide thermoplastique
- Résines ionomères.

De préférence, la matière principale choisie a une dureté shore A comprise entre 55 et 75, des zones de dureté différente pouvant être combinées afin d'améliorer le confort et l'ergonomie ou la résistance mécanique du bracelet du bracelet comme déjà mentionné.

En outre, la ou les matières choisies pour la mise en oeuvre du procédé selon l'invention peuvent comporter des charges pour améliorer le confort, l'aspect esthétique et la stabilité dans le temps du bracelet :
- Exemples de charges pour améliorer le confort :
   - Céramiques type nitrure de bore hexagonal pour évacuer l'énergie calorifique et diminuer la sudation ;
   - Fibres textiles ayant un effet capillaire afin d'évacuer la sueur ;
   - Agents antibactériens comme les particules d'argent ou de pyrithione de zinc ou sels d'aluminium pour un effet anti-odeur ;
- Exemples d'additifs pour créer des effets esthétiques intéressants :
   - Pigments colorés ou colorants, composés ayant des propriétés fluorescentes, phosphorescentes, thermochromiques ou photochromiques ;
- Exemples d'additifs pour améliorer la stabilité dans le temps du bracelet :
   - Additifs anti-UV.

Ces charges et additifs peuvent être ajoutés dans la trémie d'alimentation de la vis de l'extrudeuse ou avoir été préalablement intégrés dans la matière. Toujours dans un esprit de moduler les propriétés au sein du bracelet, il est évidemment envisageable dans le cas de la co-extrusion de n'introduire les charges et additifs que dans certaines des matières extrudées.

Après fabrication du bracelet par extrusion, des étapes additionnelles de découpe peuvent être réalisées pour faciliter la fixation du bracelet au boîtier de montre dans le cas d'une application en horlogerie ainsi que pour intégrer le fermoir.

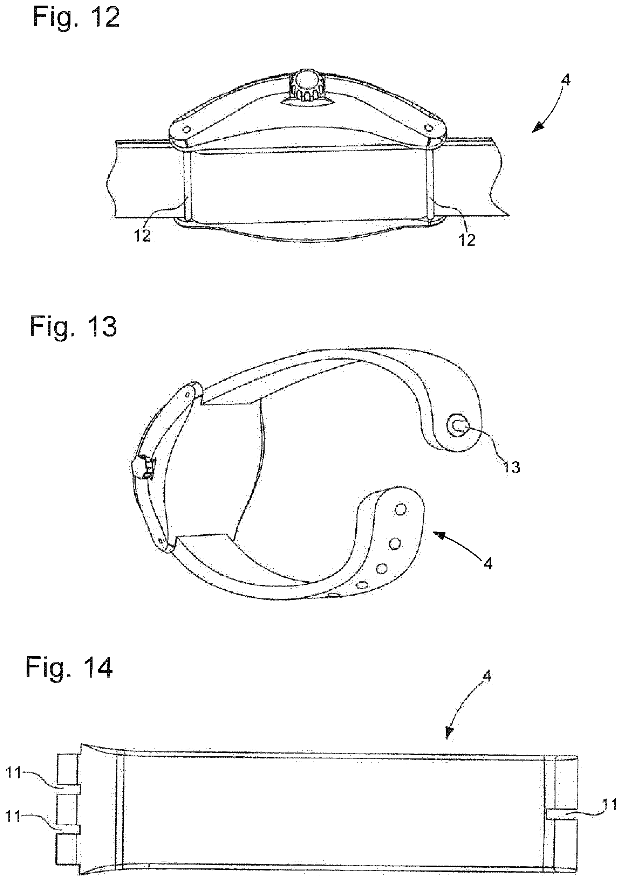

Dans le cas des bracelets issus du procédé d'extrusion dans le sens longitudinal du bracelet, la forme du bracelet et les trous désirés sont obtenus par exemple par étampage découpe jet d'eau ou par découpe laser. La bande obtenue après extrusion peut être d'une seule pièce et attachée au boîtier de montre à l'aide de passants 12 disposées de chaque côté du boîtier de montre comme représenté à la figure 12 ; il s'agit d'une construction dite NATO. Selon une variante, un brin court et un brin long sont découpés dans la bande plastique afin de réaliser un bracelet classique. Une opération de surmoulage par compression est alors nécessaire pour créer les inserts, semblables aux structures tubulaires de la figure 6. Il est également envisageable d'introduire un système de fermoir à clous 13 qui se loge dans un trou du bracelet (figure 13). Il est aussi envisageable de réaliser un bracelet sans fermoir comme pour les bracelets rigides tubulaires de la figure 2a. Dans ce cas, les extrémités libres de la bande sont fusionnées notamment par un procédé de fusion par ultrasons, chauffage infrarouge ou laser.

Dans le cas des bracelets issus du procédé d'extrusion dans le sens transversal du bracelet comme selon l'invention, l'assemblage au boîtier de montre est plus facile à réaliser. Par découpe laser ou étampage ou jet d'eau au niveau des structures tubulaires, les accroches 11 respectives pour le boîtier de montre et pour la boucle sont réalisées comme montré à la figure 14. D'autres moyens de fixation au boîtier et de fermeture tels que décrits ci-dessus sont également envisageables.

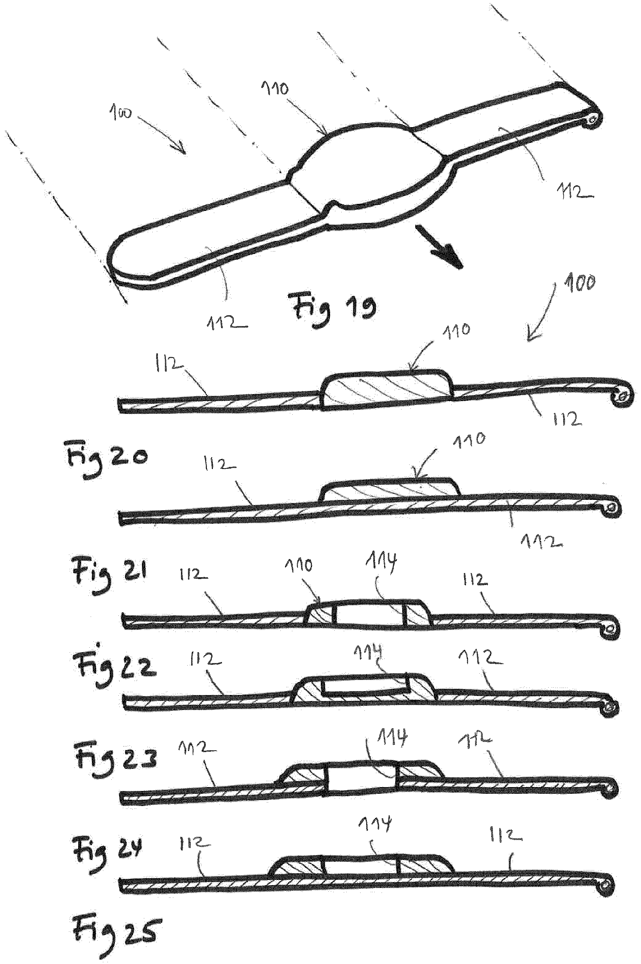

A la figure 19 est illustrée une autre variante d'un extrudat 100 destiné à former un bracelet selon le procédé de l'invention par co-extrusion de deux matériaux ayant des propriétés mécaniques différentes sélectionnées. L'extrudat 100 comporte dans une partie intermédiaire 110 située entre deux portions 112 de l'extrudat 100. La partie intermédiaire 110 est destinée à former une boite de montre tandis que les portions 112 sont destinées à former les brins souples d'un bracelet.

La partie intermédiaire 110 est formée d'un matériau, dit « matériau de boite » dont le module de Young est supérieur au module de Young du matériau constituant les portions 112 formant les brins souples du bracelet, dit « matériau de brin de bracelet ».

**A** titre d'exemple, le matériau de boite de montre présente un module d'Young de l'ordre de 2000 MPa et le matériau de bracelet présente un module d'Young de l'ordre de 30 MPa.

De préférence, le matériau de boite présente une dureté shore supérieure à 50 shore D et le matériau de brin présente une dureté shore inférieure à 75 shore A. Ainsi le matériau de boite est suffisamment rigide pour recevoir un mouvement container, et pour ne pas se déformer sauf pour le passage du container et son maintien par enclipsage dans la boite de montre comme cela sera décrit ci-après. Le matériau de brin est pour sa part suffisamment souple pour se conformer autour du poignet d'un utilisateur.

A la figure 20 est illustrée une variante de l'extrudat de la figure 19 dans lequel la partie intermédiaire 110 est reliée aux brins de bracelet 112 par des parties destinées à former les côtés de la boite de montre.

A la figure 21 est illustrée une variante de l'extrudat de la figure 19 dans lequel la partie intermédiaire 110 est reliée aux brins de bracelet 112 par une partie destinée à former le fond de la boite de montre.

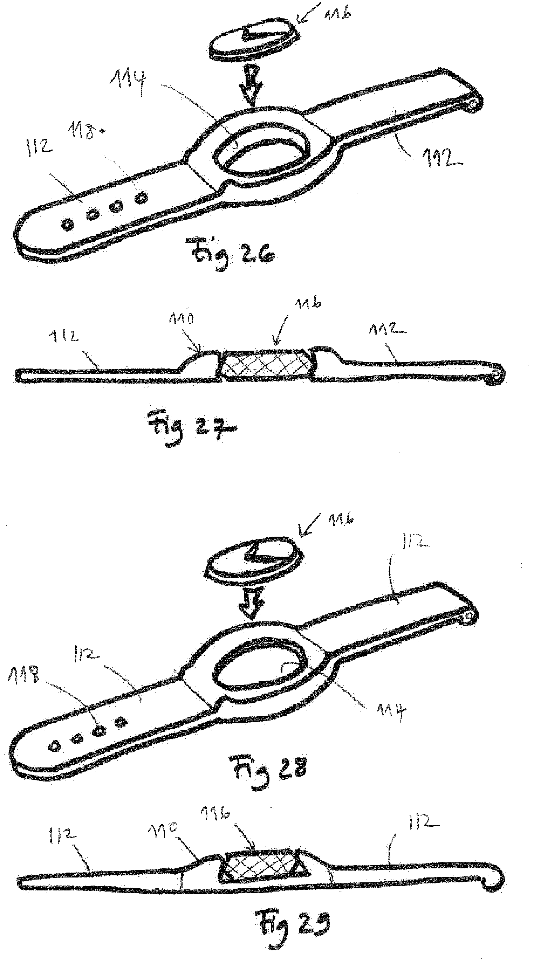

Après la fabrication de l'extrudat 100 selon l'une des figures 19 à 20, on usine ou étampe, dans une étape ultérieure, une ouverture 114 dans une face de la partie intermédiaire 110. L'ouverture 114 peut être traversante (figures 22, 24) ou borgne (figures 23, 25). L'ouverture 114 peut ainsi recevoir et maintenir en place un mouvement horloger 116 du type container c'est-à-dire un mouvement équipé de son dispositif affichage encapsulé container fermer par un verre 8 (figures 26 à 29). Au cours de la même étape les trous 118 pour le passage de l'ardillon d'une boucle ou le passage d'un plot, sont avantageusement réalisés.

Dans la variante illustrée aux figures 26 et 27 l'ouverture 114 est traversante et le mouvement container peut être inséré dans l'ouverture depuis de dessus ou le dessous du bracelet. Selon la variante illustrée aux figures 28 et 29, l'ouverture 114 est borgne. On notera encore qu'avantageusement, l'ouverture peut présenter un épaulement (non représenté) afin de faciliter le positionnement du mouvement dans l'ouverture 114.

Les bracelets ainsi réalisés par extrusion présentent de nombreux avantages. Le procédé est simple et peu coûteux tout en assurant une cadence de production élevée. Des bracelets multicolores teintés dans la masse avec des bandes nettes peuvent être obtenus contrairement au procédé actuel d'injection. Toutes les géométries sont envisageables. Il est en outre encore possible d'agrémenter la surface du bracelet d'ornements additionnels tels qu'une couture ou un décor par impression digitale, jet d'encre, tampographie, etc.

## Revendications

1. Procédé de fabrication d'un bracelet (4) de montre (3) ou de bijou comportant les étapes de :
- mise à disposition d'un premier matériau synthétique,
- mise à disposition d'une ligne d'extrusion (1) avec une filière (2) pour fabriquer un extrudat (6) à partir du premier matériau,
**caractérisé en ce qu'**il comporte les étapes suivantes :
- mise à disposition d'un ou plusieurs matériaux additionnels se distinguant du premier matériau par leurs propriétés
- mise à disposition d'une filière (2) présentant une première zone définissant un profil permettant la fabrication d'un extrudat possédant un profil tubulaire creux à au moins une de ses extrémités la filière étant agencée pour produire un extrudat (6) ayant une largeur correspondant à la longueur d'un ou deux brins du bracelet (4) **en ce que**
- ladite filière présente en outre une deuxième zone permettant de définir des profils particuliers sélectionnés parmi un profil plat, un profil bombé et un profil avec des zones en saillie (5).
- **en ce que** un ou plusieurs des matériaux additionnels est un élément de renfort (8) intégré lors de l'extrusion au travers de la filière (2).
- **en ce que** l'élément de renfort (8) est un tube intégré au coeur de la filière (2) et enrobé du premier matériau afin de fabriquer un bracelet (4). et
- **en ce que** l'élément de renfort (8) est intégré au niveau d'une ou des deux extrémités latérales de la filière (2) de manière que l'élément de renfort s'étende perpendiculairement à la direction longitudinale du bracelet.

2. Procédé selon la revendication 1, dans lequel le décor ou l'élément de renfort (8) est réalisé dans un matériau métallique.

3. Procédé selon l'une quelconque des revendications précédentes, dans lequel la filière (2) présente à une ou deux extrémités latérales un profil tubulaire creux (7) faisant saillie par rapport au reste du profil de la filière (2).

4. Procédé selon la revendication 2, comprenant une étape de découpe jet d'eau ou découpe laser ou d'étampage de l'extrudat (6) issu de la filière (2) pour former les accroches (11) respectives à un boîtier de montre et à une boucle (15) de fermeture.

5. Procédé selon l'une quelconque des revendications précédentes, dans lequel le premier matériau et, éventuellement un ou plusieurs matériaux additionnels respectivement le matériau de renfort, comporte une charge améliorant les performances mécaniques, le confort, la stabilité dans le temps et/ou l'aspect esthétique du bracelet (4).

6. Procédé selon la revendication 5, dans lequel la charge est sélectionnée parmi le groupe composé de particules céramiques, d'agents antibactériens tels que des particules d'argent ou des particules de pyrithione de zinc ou de sels d'aluminium, de fibres textiles, de composés anti-UV, de pigments, de composés fluorescents, de composés phosphorescents, de composés thermochromiques, de composés photochromiques et d'un mélange de ceux-ci.

7. Bracelet (4) de montre ou de bijou, ou bijou obtenu à l'aide du procédé selon l'une quelconque des revendications précédentes, **caractérisé en ce qu'**il comporte des bandes (16) transversales de couleurs différentes teintées dans la masse.

8. Bracelet (4) selon la revendication 7, comportant dans la masse des bandes (16) luminescentes transversales.

9. Bracelet (4) selon l'une quelconque des revendications 7 à 8, comportant une face intérieure et une face extérieure composées de matériaux différents.

10. Bracelet (4) selon l'une quelconque des revendications 7 à 9, comportant des composés ayant des propriétés antibactériennes, anti-odeur, anti-sudation, de protection anti-UV, phosphorescentes, fluorescentes, thermochromiques et/ou photochromiques.

11. Bracelet (4) selon l'une quelconque des revendications 7 à 10, comportant un renfort (8) disposé à une extrémité, à ses extrémités ou au milieu de son épaisseur.

12. Bracelet (4) selon l'une quelconque des revendications 7à 11, comportant à une ou à ses extrémités un matériau plastique différent de par ses propriétés mécaniques du matériau plastique disposé entre les extrémités.

13. Bracelet (4) selon l'une quelconque des revendications 7 à 12, comportant des zones de dureté différentes avec une dureté shore A comprise entre 55 et 75.

14. Bracelet selon l'une quelconque des revendications 7 à 13, **caractérisé en ce qu'**il comporte dans une partie intermédiaire située entre les deux extrémités du bracelet, une ouverture ménagée dans une face du bracelet, **en ce que** ladite ouverture est délimitée par une zone destinée à former une boite de montre, ladite zone s'étendant sur au moins une partie de la périphérie de ladite ouverture et étant formée d'un matériau dit matériau de boite dont le module de Young est supérieur au module de Young du matériau constituant les brins souple du bracelet dit matériau de brin de bracelet.

15. Bracelet selon la revendication 14 **caractérisé en ce que** le matériau de boite présente une rigidité supérieure à 50 shore D et **en ce que** le matériau de brin présente une dureté shore inférieure à 75 shore A.

16. Bracelet selon la revendication 14 ou 15 **caractérisé en ce que** l'ouverture est traversante.

17. Bracelet selon l'une des revendications 14 à 16 **caractérisé en ce que** l'ouverture présente un épaulement.

18. Montre (3) ou bijou comportant un bracelet (4) selon l'une quelconque des revendications 7 à 17.

## Patentansprüche

1. Verfahren zur Herstellung eines Armbands (4) einer Uhr (3) oder eines Schmuckstücks, das die folgenden Schritte umfasst:
- Bereitstellen eines ersten synthetischen Materials und
- Bereitstellen einer Extrusionsanlage (1) mit einer Düse (2) zum Herstellen eines Extrudats (6) aus dem ersten Material,
**dadurch gekennzeichnet, dass** es die folgenden Schritte umfasst:
- Bereitstellen eines oder mehrerer zusätzlicher Materialien, die sich von dem ersten Material in ihren Eigenschaften unterscheiden, und
- Bereitstellen einer Düse (2) mit einem ersten Bereich, der ein Profil definiert, das die Herstellung eines Extrudats ermöglicht, das an mindestens einem seiner Enden ein hohles rohrförmiges Profil aufweist, wobei die Düse so angeordnet ist ein Extrudat (6) herzustellen, dessen Breite der Länge von einem oder zwei Strängen des Armbands (4) entspricht, **dadurch gekennzeichnet,**
- **dass** die Düse außerdem einen zweiten Bereich aufweist, der ermöglicht, besondere Profile zu definieren, die aus einem flachen Profil, einem gewölbten Profil und einem Profil mit vorstehenden Bereichen (5) ausgewählt werden,
- **dass** eines oder mehrere der zusätzlichen Materialien ein Verstärkungselement (8) ist, das bei der Extrusion durch die Düse (2) integriert wird,
- **dass** das Verstärkungselement (8) ein Rohr ist, das in den Kern der Düse (2) integriert und mit dem ersten Material ummantelt ist, um ein Armband (4) herzustellen, und
- **dass** das Verstärkungselement (8) auf Höhe eines seitlichen Endes oder beider seitlichen Enden der Düse (2) integriert ist, derart, dass sich das Verstärkungselement senkrecht zur Längsrichtung des Armbands erstreckt.

2. Verfahren nach Anspruch 1, bei dem die Verzierung oder das Verstärkungselement (8) aus einem metallischen Material hergestellt wird.

3. Verfahren nach einem der vorhergehenden Ansprüche, bei dem die Düse (2) an einem oder an beiden seitlichen Enden ein hohles rohrförmiges Profil (7) aufweist, das über das übrige Profil der Düse (2) hinausragt.

4. Verfahren nach Anspruch 2, das einen Schritt zum Wasserstrahlschneiden oder Laserschneiden oder Stanzen des Extrudats (6) aus der Düse (2) umfasst, um die jeweiligen Haken (11) an einem Uhrengehäuse bzw. an einer Verschlussschnalle (15) zu bilden.

5. Verfahren nach einem der vorhergehenden Ansprüche, bei dem das erste Material und gegebenenfalls ein oder mehrere zusätzliche Materialien bzw. das Verstärkungsmaterial einen Füllstoff enthalten, der die mechanischen Eigenschaften, den Tragekomfort, die zeitliche Stabilität und/oder das ästhetische Aussehen des Armbands (4) verbessert.

6. Verfahren nach Anspruch 5, wobei der Füllstoff aus der Gruppe gewählt wird, die aus Keramikpartikeln, aus antibakteriellen Mitteln wie etwa Silberpartikeln oder Zinkpyrithionartikeln oder Aluminiumsalzen, Textilfasern, UV-Schutzverbindungen, Pigmenten, fluoreszierenden Verbindungen, phosphoreszierenden Verbindungen, thermochromen Verbindungen, photochrome Verbindungen und einer Mischung davon besteht.

7. Armband (4) einer Uhr oder eines Schmuckstücks oder Schmuckstücks, das mit Hilfe des Verfahrens nach einem der vorhergehenden Ansprüche hergestellt wurde, **dadurch gekennzeichnet, dass** es in der Masse gefärbte Querstreifen (16) in verschiedenen Farben aufweist.

8. Armband (4) nach Anspruch 7, das in der Masse quer verlaufende lumineszierende Streifen (16) aufweist.

9. Armband (4) nach einem der Ansprüche 7 bis 8, mit einer Innenseite und einer Außenseite, die aus unterschiedlichen Materialien gebildet sind.

10. Armband (4) nach einem der Ansprüche 7 bis 9, das Verbindungen mit Eigenschaften wie antibakteriell, geruchshemmend, Anti-Transpiration, UV-Schutz, phosphoreszierend, fluoreszierend, thermochromatisch und/oder fotochromatisch hat.

11. Armband (4) nach einem der Ansprüche 7 bis 10, mit einer Verstärkung (8), die an einem Ende, an beiden Enden oder in der Mitte ihrer Dicke angeordnet ist.

12. Armband (4) nach einem der Ansprüche 7 bis 11, das an einem Ende oder an seinen beiden Enden ein Kunststoffmaterial aufweist, das sich in seinen mechanischen Eigenschaften von dem zwischen den Enden angeordnet Kunststoffmaterial unterscheidet.

13. Armband (4) nach einem der Ansprüche 7 bis 12, das Bereiche unterschiedlicher Härte mit einer Shore-Härte A zwischen 55 und 75 aufweist.

14. Armband nach einem der Ansprüche 7 bis 13, **dadurch gekennzeichnet, dass** es in einem Zwischenbereich zwischen den beiden Enden des Armbands eine Öffnung aufweist, die in einer Fläche des Armbands ausgespart ist, dass die Öffnung durch einen Bereich begrenzt ist, der dazu bestimmt ist, ein Uhrengehäuse zu bilden, wobei sich der Bereich über mindestens einen Teil des Umfangs der Öffnung erstreckt und aus einem Material gebildet ist, das als Gehäusematerial bezeichnet wird und dessen Young-Modul größer ist als der Young-Modul des Materials, das die flexiblen Stränge des Armbands bildet und als Armbandstrangmaterial bezeichnet wird.

15. Armband nach Anspruch 14, **dadurch gekennzeichnet, dass** das Gehäusematerial eine Steifigkeit von mehr als 50 Shore D aufweist, und dass das Strangmaterial eine Shore-Härte von weniger als 75 Shore A aufweist.

16. Armband nach Anspruch 14 oder 15, **dadurch gekennzeichnet, dass** die Öffnung durchgehend ist.

17. Armband bei einem der Ansprüche 14 bis 16, **dadurch gekennzeichnet, dass** die Öffnung eine Schulter aufweist.

18. Uhr (3) oder Schmuckstück umfassend ein Armband (4) nach einem der Ansprüche 7 bis 17.

## Claims

1. A method of fabrication of a wristband (4) of a watch (3) or piece of jewellery, involving the steps of:
- providing a first synthetic material,
- providing an extrusion line (1) with a die plate (2) for making an extrudate (6) from the first material,
**characterised in that** it involves the following steps:
- providing one or more additional materials distinguished in their properties from the first material
- providing a die plate (2) having a first zone defining a profile allowing for the fabrication of an extrudate having a hollow tubular profile at least at one of its ends the die plate being arranged to produce an extrudate (6) having a width corresponding to the length of one or two strands of the wristband (4), and **in that**
- said die plate furthermore has a second zone allowing the defining of particular profiles selected from among a flat profile, a curved profile, and a profile with projecting zones (5).
- **in that** one or more of the additional materials is a reinforcing element (8) integrated during the extrusion through the die plate (2).
- **in that** the reinforcing element (8) is a tube integrated at the core of the die plate (2) and coated with the first material in order to fabricate a wristband (4) and
- **in that** the reinforcing element (8) is integrated at one or both lateral ends of the die plate (2) so that the reinforcing element extends perpendicularly to the longitudinal direction of the wristband.

2. The method as claimed in claim 1, wherein the decoration or the reinforcing element (8) is realised in a metal material.

3. The method as claimed in any one of the preceding claims, wherein the die plate (2) has at one or two lateral ends a hollow tubular profile (7) projecting with respect to the rest of the profile from the die plate (2).

4. The method as claimed in claim 2, involving a step of water jet cutting or laser cutting or punching of the extrudate (6) emerging from the die plate (2) to form the respective hooks (11) on a watch case and on a clasp buckle (15).

5. The method as claimed in any one of the preceding claims, wherein the first material and, optionally one or more additional materials or the reinforcing material, contains a ballast improving the mechanical performance, the comfort, the stability over time and/or the aesthetic appearance of the wristband (4).

6. The method as claimed in claim 5, wherein the ballast is selected from the group made up of ceramic particles, antibacterial agents such as silver particles or particles of zinc pyrithione or aluminium salts, textile fibres, anti-UV compounds, pigments, fluorescent compounds, phosphorescent compounds, thermochromic compounds, photochromic compounds, and a mixture of these.

7. A wristband (4) of a watch or jewellery, or jewellery obtained with the aid of the method as claimed in any one of the preceding claims, **characterised in that** it comprises transverse bands (16) of different colours stained in the mass.

8. The wristband (4) as claimed in claim 7, comprising luminescent transverse bands (16) in the mass.

9. The wristband (4) as claimed in any one of claims 7 to 8, comprising an interior face and an exterior face composed of different materials.

10. The wristband (4) as claimed in any one of claims 7 to 9, comprising compounds having antibacterial, anti-odour, anti-perspirant, anti-UV protection, phosphorescent, fluorescent, thermochromic and/or photochromic properties.

11. The wristband (4) as claimed in any one of claims 7 to 10, having a reinforcement (8) situated at one end, at its ends, or in the middle of its thickness.

12. The wristband (4) as claimed in any one of claims 7 to 11, having at one end or at its ends a plastic material of different mechanical properties from the plastic material situated between the ends.

13. The wristband (4) as claimed in any one of claims 7 to 12, having zones of different hardness with a shore A hardness between 55 and 75.

14. The wristband as claimed in any one of claims 7 to 13, **characterised in that** it comprises, in an intermediate portion located between the two ends of the wristband, an opening devised in one face of the wristband, and **in that** said opening is bounded by a zone designed to form a watch case, said zone extending over at least one portion of the periphery of said opening and being formed of so-called case material whose Young modulus is greater than the Young modulus of the flexible material making up the strands of the wristband, so-called wristband strand material.

15. The wristband as claimed in claim 14 **characterised in that** the case material has a rigidity greater than 50 shore D and **in that** the strand material has a shore hardness less than 75 shore A.

16. The wristband as claimed in claim 14 or 15 **characterised in that** the opening is a through-opening.

17. The wristband as claimed in one of claims 14 to 16 **characterised in that** the opening has a shoulder.

18. A watch (3) or jewellery comprising a wristband (4) as claimed in any one of claims 7 to 17.
